# EUROPÄISCHE PATENTSCHRIFT

(11) **EP 1 800 520 B1**
(45) Veröffentlichungstag und Bekanntmachung des Hinweises auf die Patenterteilung: **29.04.2009**
(21) Anmeldenummer: 05792885.5
(22) Anmeldetag: 28.09.2005
(51) Int. Cl.: H05B 3/32, B60H 1/22, B60H 1/34

(54) **ELEKTRISCHE HEIZUNGSANORDNUNG, INSBESONDERE FÜR EIN KRAFTFAHRZEUG**
ELECTRICAL HEATING ARRANGEMENT, ESPECIALLY FOR A MOTOR VEHICLE
SYSTEME DE CHAUFFAGE ELECTRIQUE, NOTAMMENT POUR UN VEHICULE AUTOMOBILE

(30) Priorität: 04.10.2004 EP 04292354
(43) Veröffentlichungstag der Anmeldung: 27.06.2007
(73) Patentinhaber: Behr France Rouffach SAS, 68250 Rouffach (FR)
(72) Erfinder: BRUN, Michel, F-68740 Rustenhart (FR); ECKERLEN, Gerard, 68250 Rouffach (FR); MISS, Pascal, F-67600 Sélestat (FR); MOUGEY, Mathieu, F-68190 Ensisheim (FR); SCHMITTHEISLER, Christophe, F-67680 Epfig (FR)
(74) Vertreter: Mantel, Berthold Friedrich
(86) Internationale Anmeldenummer: PCT/EP2005/010479
(87) Internationale Veröffentlichungsnummer: WO 2006/037534

(56) Entgegenhaltungen:
- EP-A- 0 243 077
- EP-A- 1 291 208
- DE-A1- 10 061 661
- DE-C1- 4 213 510
- DE-C1- 19 923 189
- US-B1- 6 261 173
- PATENT ABSTRACTS OF JAPAN Bd. 015, Nr. 228 (M-1123), 11. Juni 1991 (1991-06-11) -& JP 03 070621 A (NIPPONDENSO CO LTD), 26. März 1991 (1991-03-26)

## Beschreibung

Die Erfindung betrifft eine elektrische Heizungsanordnung, insbesondere für ein Kraftfahrzeug, gemäß dem Oberbegriff des Anspruchs 1.

Aus der DE 101 44 757 A1 ist eine Heizungsanordnung mit einem PTC-Element für Personenfahrzeuge bekannt, wobei eine Zusatzheizung mit einem Heizkörper, der im Betrieb der Zusatzheizung von Heizluft durchströmt wird, und mit mindestens einer Luftaustrittsöffnung im Fußbereich eines Fahrgastraumes versehen ist, zu der die Heizluft geleitet wird. Um auf flexible Weise eine vertikale Temperaturschichtung im Fahrgastraum erzeugen zu können, die insbesondere auch an Sitzen im Fond als angenehm empfunden wird, ist der Heizkörper als ein elektrisches PTC-Element gestaltet, welches unmittelbar an der Luftaustrittsöffnung im Fußbereich angeordnet ist. Ein derartiger Zuheizer lässt noch Wünsche offen. Gemäß einem Ausführungsbeispiel ist ein PTC-Element in Gestalt mehrerer Heizwaben in einem nicht näher beschriebenen Kunststoff-Rahmen angeordnet, der die Luftaustrittsöffnung einfasst.

Die DE 100 61 661 A1 offenbart einen elektrisch beheizbaren Grill, welcher in einer Ausströmöffnung eines Fahrgastraumbelüftungssystems angeordnet, bei dem die durch Wärmetauscher vorgehandelte Luft durch verschiedene Strömungskanäle zu Ausströmöffnungen im Fahrer-, Beifahrer- und Fondbeifahrerraum geführt ist. Im Bereich des Grills kann eine Temperaturregelvorrichtung angeordnet sein, mit welcher die Temperatur des ausströmenden Luftstroms eingestellt wird. Im Bereich des Grills kann ferner eine Temperaturmessvorrichtung angeordnet sein, welche die Temperatur des ausströmenden Luftstroms am Grill und/oder im Fahrgastraum misst. Sie kann direkt in oder an der Ausströmöffnung positioniert sein, so dass eine schnelle Rückkopplung an den Grill möglich ist. Dabei kann jeder Grill separat angesteuert werden, wobei die Ansteuerung unter anderem dadurch erfolgen kann, dass die Temperaturregelvorrichtung direkt mit der Temperaturmessvorrichtung kommuniziert, so dass sich die Spannungs- und/oder Strömstärke, mit welcher der Grill versorgt wird, in Abhängigkeit von der Differenz zwischen Temperaturregelvorrichtung und Temperaturmessvorrichtung einstellen lässt. Beim Grill kann es sich auch um ein in der DE 100 61 661 A1 in Hinblick auf die konstruktive Ausgestaltung nicht näher beschriebenes, selbstregelndes PTC-Element handeln.

Dokumente EP-A-0 243 077, US-B1-6 261 173, JP-A-03070621, DE-C1- 199 23 189 und DE-C1-42 13 510 veröffentlichen weitere solchen Heizanordnungen.

Es ist Aufgabe der Erfindung, eine verbesserte elektrische Heizungsanordnung zur Verfügung zu stellen.

Diese Aufgabe wird gelöst durch eine elektrische Heizungsanordnung mit den Merkmalen des Anspruchs 1. Vorteilhafte Ausgestaltungen sind Gegenstand der Unteransprüche.

Erfindungsgemäß ist eine elektrische Heizungsanordnung vorgesehen, mit einem Luftkanal-Gehäuse, durch welchen im Bedarfsfall zu erwärmende Luft strömt, und einem elektrischen Heizelement, das im Luftkanal-Gehäuse angeordnet ist, wobei das elektrische Heizelement direkt im Luftkanal-Gehäuse angeordnet ist. Dabei ist das Heizelement der Heizungsanordnung direkt, d.h. ohne speziellen Rahmen, in das Luftkanal-Gehäuse eingelegt, so dass sich die Herstellungskosten, wie auch die Recycling-Kosten deutlich verringern.

Zusätzlich, ist das Luftkanal-Gehäuse im Bereich, in welchem das elektrische Heizelement angeordnet ist, mindestens zweiteilig als Kunststoffgehäuse ausgebildet. Eine zweiteilige Ausgestaltung ermöglicht eine einfache und schnelle Montage bei guten Festigkeitseigenschaften. Ferner lässt sich das Luftkanal-Gehäuse einfach mittels Spritzgießens herstellen. Die beiden Gehäuseteile sind bevorzugt mittels Clipsverbindungen und/oder Klammern auf der Gehäuseaußenseite miteinander verbunden, so dass keine Verbindungselemente in den Innenraum ragen und den Strömungskanal beeinflussen.

Die beiden Teile des Luftkanal-Gehäuses sind vorzugsweise asymmetrisch ausgebildet, wodurch sich Zusammenbaufehler einfach vermeiden lassen. Ferner kann die Positionierung des elektrischen Heizelements in einem größer ausgebildeten Unterteil einfacher und exakter erfolgen, so dass bevorzugt ein U-förmiges Unterteil und ein dieses verschließendes Oberteil in Form eines Deckels vorgesehen sind.

Zur Abdichtung ist bevorzugt zwischen den beiden Teilen des Luftkanal-Gehäuses beidseitig je eine Art Nut-Feder-Verbindung ausgebildet. Dies ermöglicht ein gewisses Spiel im Falle von unterschiedlichen Wärmeausdehnungen oder sonstigen Verformungen und eine relativ große Fertigungstoleranz, ohne dass es zu Undichtheiten zwischen den Gehäuseteilen kommt.

Das elektrische Heizelement umfasst mindestens ein PTC-Element. Dabei sind vorzugsweise auf beiden Seiten des PTC-Elements Kontaktbleche angeordnet, welche der elektrischen Kontaktierung dienen. Die Verbindung zwischen Kontaktblechen und PTC-Element erfolgt vorzugsweise mittels einer Klebe-Verbindung.

Auf der dem PTC-Element abgewandten Seite des Kontaktblechs ist bevorzugt eine Wellrippe sowie gegebenenfalls weitere Kontaktbleche, PTC-Elemente und Wellrippen mittels Klebe-Verbindungen, welche vorzugsweise durch einen Zwei-Komponenten-Silikon-Klebstoff gebildet sind, angebracht.

Mindestens zwei Kontaktbleche sind derart ausgebildet, dass sie an ihrem einen Ende als Teil eines Steckers ausgebildet sind, welcher zur elektrischen Kontaktierung seitlich über die von Luft durchströmte Fläche mit Wellrippen hinausragt. Bevorzugt ist hierbei mindestens ein Kontaktblech Z-förmig in seinem Endbereich, der seitlich über die Wellrippe hinausragt, ausgebildet.

Vorzugsweise ist im Luftkanal-Gehäuse ein Verbindungsstück mit einem isolierenden Gehäuse angeordnet.

Zur Vereinfachung der Montage ist ferner zumindest ein führungsnutartiges Positionierungselement am Gehäuse ausgebildet, in welches ein leicht vorstehender Wandbereich des Verbindungsstücks eingeführt wird.

Das Gehäuse weist vorzugsweise eine isolierende Trennwand auf, welche sicherstellt, dass ein Kurzschluss zwischen den Kontaktblechen, zwischen welchen das PTC-Element angeordnet ist, vermieden wird. Entsprechend ist vorzugsweise am Luftkanal-Gehäuse mindestens ein Abstandshalter ausgebildet, welcher sicherstellt, dass ein Kurzschluss zwischen den Kontaktblechen, zwischen welchen das PTC-Element angeordnet ist, innerhalb des elektrischen Heizelements vermieden wird.

Bevorzugt ist ein Regler für die elektrische Ansteuerung des elektrischen Heizelements vorgesehen. Dieser Regler ist vorzugsweise seitlich am Heizelement angeordnet.

Dabei kann der Regler bevorzugt eine Nut aufweisen, die zur Fixierung der Gehäuseteile aneinander dient, indem ein an jedem der Gehäuseteile vorgesehener rippenartiger Vorsprung in die Nut eingeführt ist. Zur Erleichterung des Einführens ist vorzugsweise eine Einführschräge an der Nut vorgesehen.

Um die Leistungselektronik zu kühlen, ist bevorzugt am Regler eine Kühlplatte vorgesehen, welche zumindest teilweise in das Luftkanal-Gehäuse ragt, so dass sie von der in demselben strömenden Luft umströmt wird, wobei die Kühlplatte in Luftströmungsrichtung gesehen vor dem oder auf der dem Luftstrom zugewandten Seite des Heizelements angeordnet ist, so dass sichergestellt ist, dass nur kühle, nicht durch das Heizelement erwärmte Luft, die Kühlplatte umströmt. Die Kühlplatte weist bevorzugt Kühlrippen zur Vergrößerung der Wärmeübertragungsfläche auf.

Im durch das Luftkanal-Gehäuse gebildeten Luftkanal ist vorzugsweise nach dem Heizelement ein Temperaturfühler angeordnet, wobei es sich beispielsweise um ein Thermoelement aber auch um einen beliebigen anderen Temperaturfühler handeln kann. Dieser stellt sicher, dass das Heizelement nicht durch zu große Hitzeentwicklung überlastet wird.

Das Luftkanal-Gehäuse weist vorzugsweise am Gehäuseober- und/oder -unterteil Rippen auf, die der Luftführung dienen. Zusätzlich können diese, insbesondere im Luftaustrittsbereich vorgesehenen Rippen als Schutz vor Fremdkörpern dienen, die ansonsten in das Luftkanal-Gehäuse gelangen könnten. Die Rippen sind vorzugsweise gleichmäßig über den Luftaustritt verteilt und im Wesentlichen parallel zu den Gehäuseseiten angeordnet.

Um den Luftstrom vom Boden, an welchem das Luftkanal-Gehäuse üblicherweise angebracht ist, abzuheben, ist vorzugsweise am Luftaustritt mindestens eine Rampe ausgebildet, die den Luftstrom nach oben lenkt.

Eine einfache und sichere Fixierung des zweiteiligen Luftkanal-Gehäuses am Fahrzeugboden o.ä. mittels einer oder mehrerer Schrauben ermöglicht das Vorsehen mindestens einer Lasche, die als zweiteiliger, insbesondere als mittig geteilter Ring ausgebildet ist, wobei ein Teil durch einen entsprechend ausgebildeten Bereich des Gehäuseunterteils und der andere Teil durch einen entsprechend ausgebildeten Bereich des Gehäuseoberteils gebildet wird. Die Lasche ist vorzugsweise mittig am Luftaustritt des Luftkanal-Gehäuses vorgesehen.

Im Folgenden wird die Erfindung anhand eines Ausführungsbeispiels mit einer Variante unter Bezugnahme auf die Zeichnung im Einzelnen erläutert. In der Zeichnung zeigen:

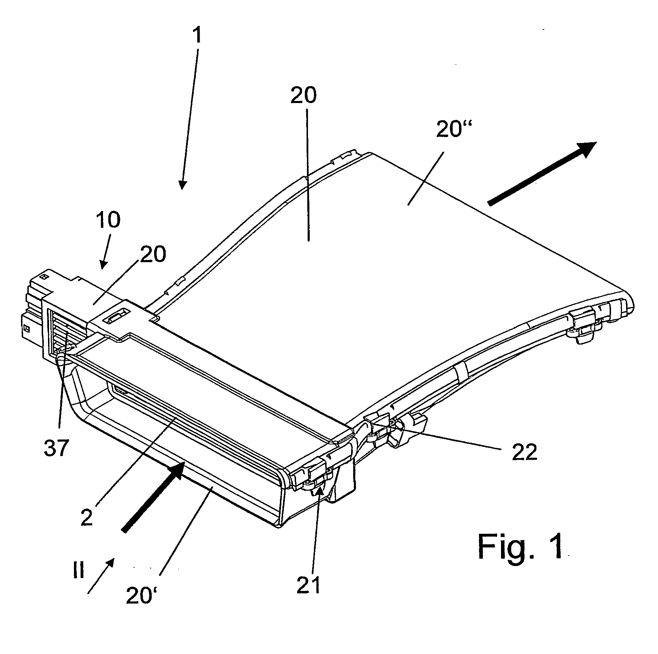

- Fig. 1: eine perspektivische Ansicht auf eine erfindungsgemä- ße Heizungsanordnung,
- Fig. 2: eine Ansicht auf die Heizungsanordnung von Fig. 1 in Richtung des Pfeils II von Fig. 1,
- Fig. 3: die Heizungsanordnung von Fig. 1 in einem Längs- schnitt,

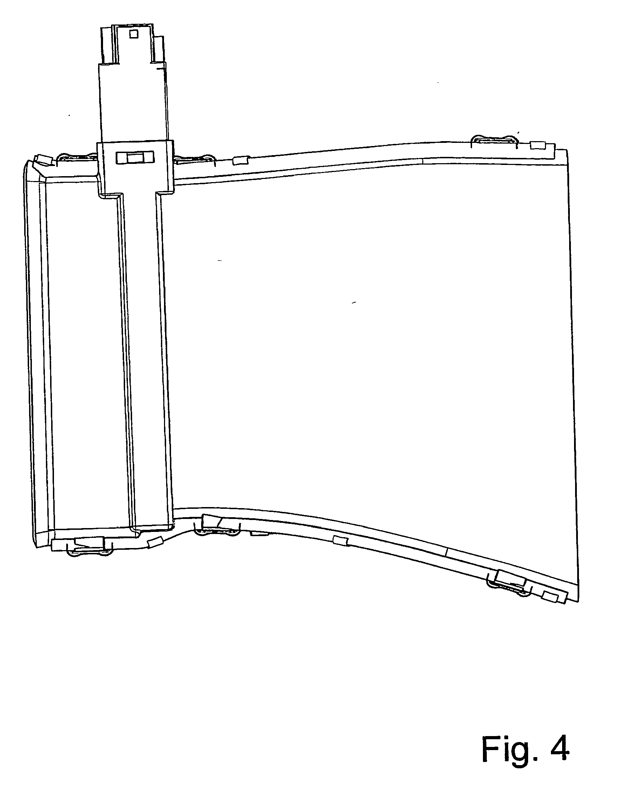

- Fig. 4: eine Draufsicht auf die Heizungsanordnung von Fig. 1,

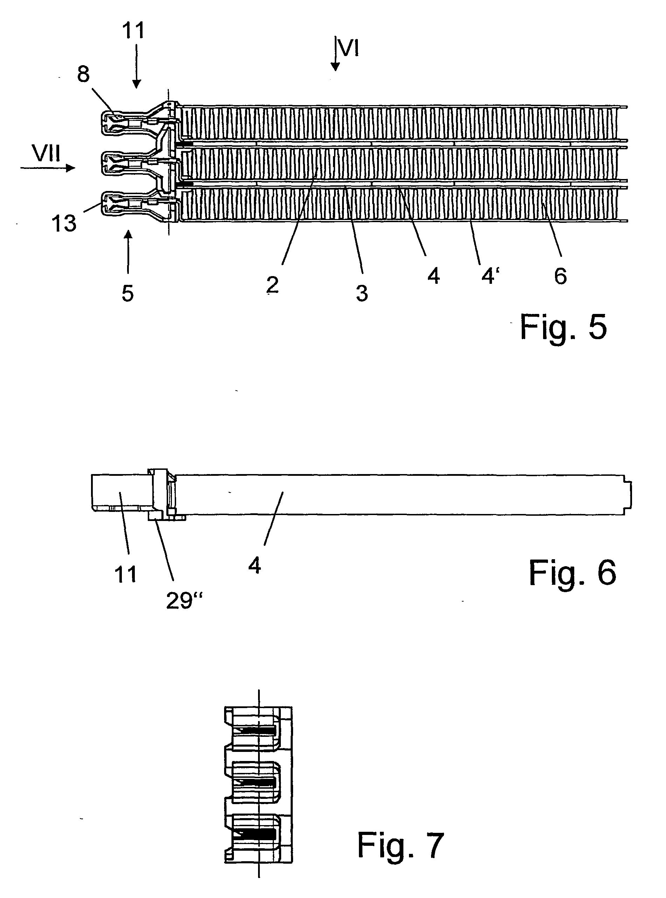

- Fig. 5: eine Darstellung des elektrischen Heizelements, das in der Heizungsanordnung von Fig. 1 angeordnet ist,
- Fig. 6: eine Seitenansicht eines Heizelements von Fig. 5 in Richtung des Pfeils VI von Fig. 5,
- Fig. 7: eine Seitenansicht eines Heizelements von Fig. 5 in Richtung des Pfeils VI/ von Fig. 5,

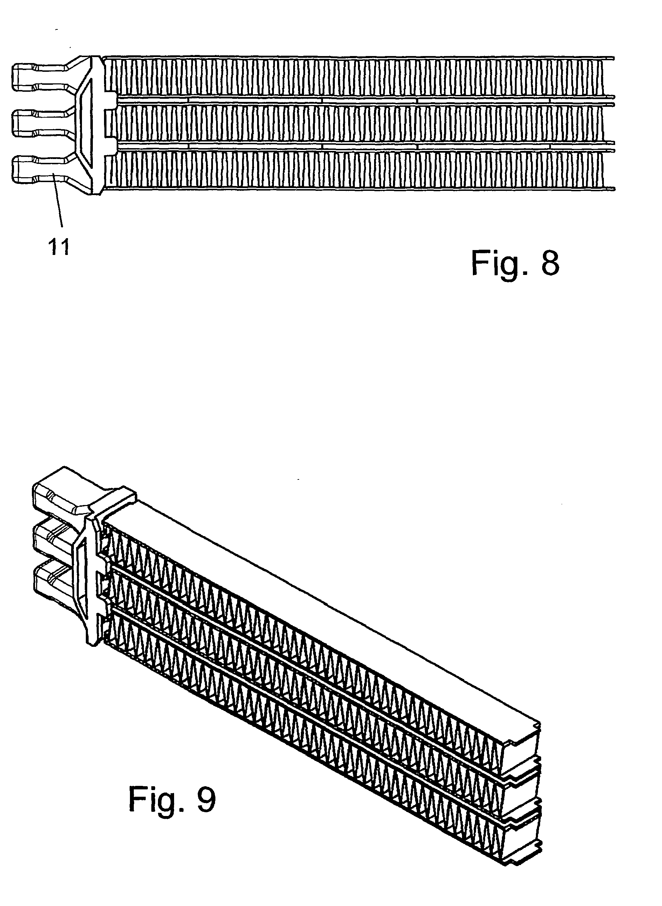

- Fig. 8: eine Ansicht des Heizelements von Fig. 5 von unten,
- Fig. 9: eine perspektivische Ansicht des Heizelements von Fig. 5,

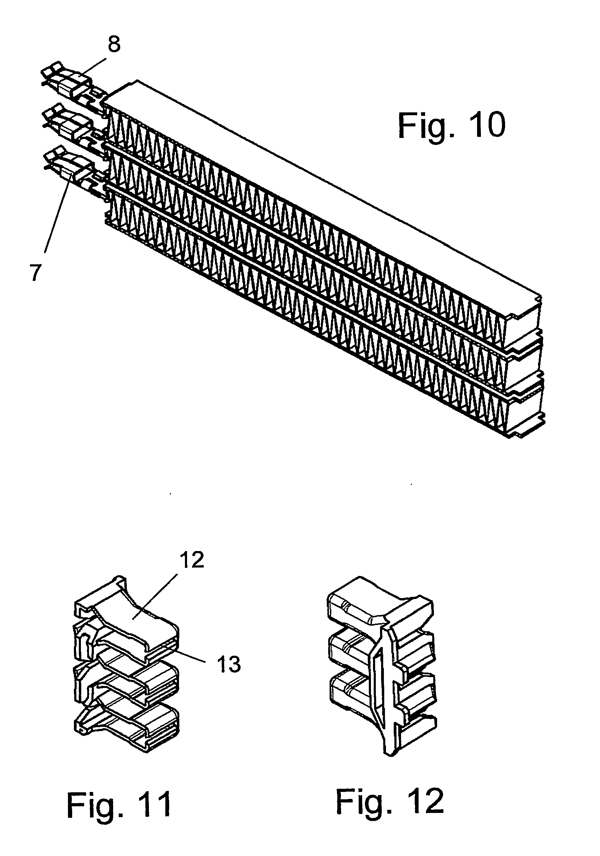

- Fig. 10: eine perspektivische Ansicht des Heizelements ent- sprechend Fig. 9, ohne Darstellung des Verbindungs- stücks,
- Fig.11: eine perspektivische Darstellung des Verbindungs- stücks,
- Fig. 12: eine andere perspektivische Darstellung des Verbin- dungsstücks,

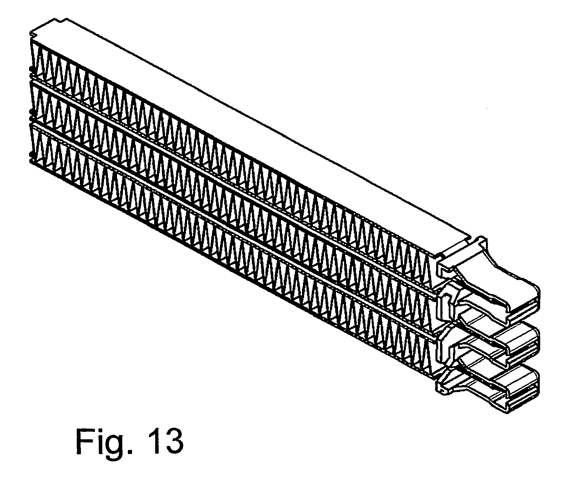

- Fig. 13: eine perspektivische Darstellung des Heizelements mit Verbindungsstück,

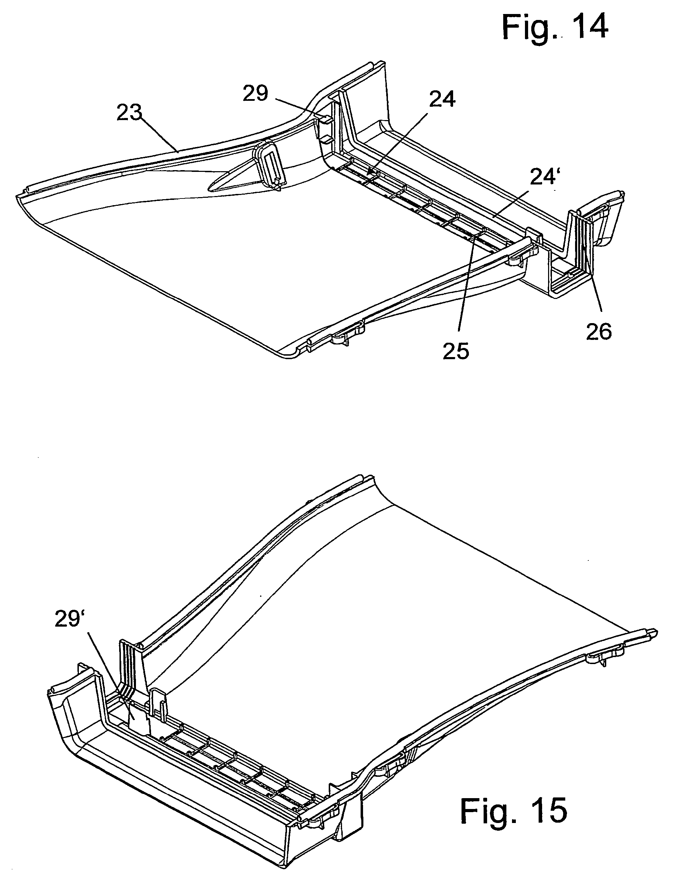

- Fig. 14: eine perspektivische Darstellung des unteren Gehäuse- teils,
- Fig. 15: eine andere perspektivische Darstellung des unteren Gehäuseteils,
- Fig. 16: eine perspektivische Darstellung des unteren Gehäuse- teils mit Heizelement,
- Fig. 17: eine andere perspektivische Darstellung des unteren Gehäuseteils mit Heizelement und Temperaturfühler,

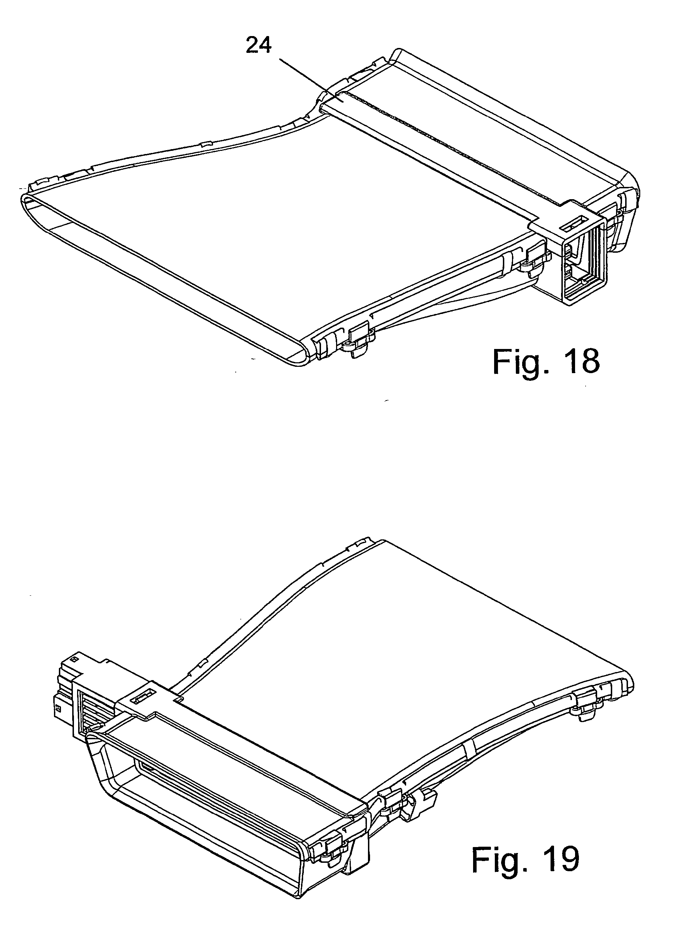

- Fig. 18: eine perspektivische Darstellung des zusammengebau- ten Gehäuses,
- Fig. 19: eine andere perspektivische Darstellung des zusam- mengebauten Gehäuses,

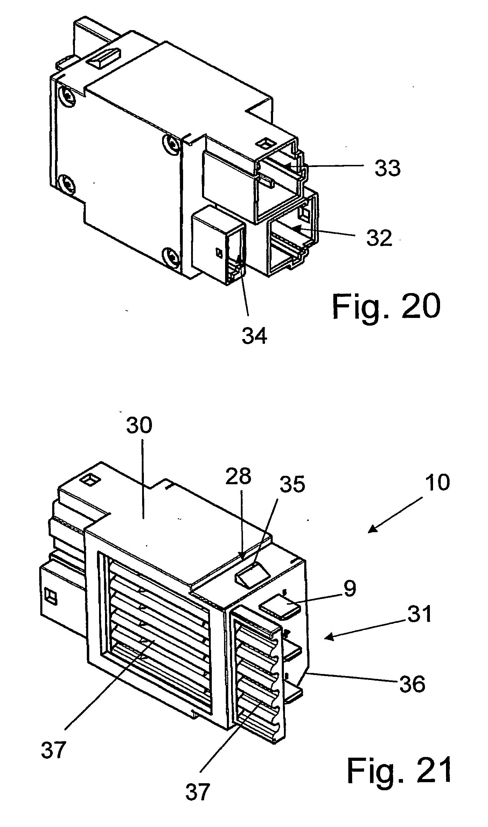

- Fig. 20: eine perspektivische Darstellung des Reglers,
- Fig. 21: eine andere perspektivische Darstellung des Reglers,
- Fig. 22: eine schematische Darstellung des Kraftfahrzeugs mit der Heizungsanordnung,
- Fig. 23: eine perspektivische Ansicht eines Gehäuseunterteils gemäß einer Variante von unten,
- Fig. 24: das Gehäuseunterteil von Fig. 23 von schräg oben,
- Fig. 25: eine Detaildarstellung des linken Bereichs von Fig. 24,
- Fig. 26: eine perspektivische Ansicht einer Gehäusehälfte der Variante von Fig. 23,
- Fig. 27: eine Detaildarstellung des unteren Bereichs von Fig. 26,
- Fig. 28: einen Schnitt durch den Verbindungsbereich der Ge- häusehälften und den Regler gemäß der Vairante von Fig. 23,
- Fig. 29: eine perspektivische Ansicht des Reglers von Fig. 28,
- Fig. 30: eine perspektivische Ansicht der zusammengebauten Gehäusehälften gemäß der Variante von Fig. 23, und
- Fig. 31: eine Detailansicht des Befestigungsbereichs der zu- sammengebauten Gehäusehälften von Fig. 30.

Bei einer als Zuheizer dienenden PTC-Heizungsanordnung 1 einer Kraftfahrzeug-Klimaanlage mit mehreren ein elektrisches Heizelement 2 in Form eines Heizgitters bildenden PTC-Elementen 3 sind die PTC-Elemente 3 auf an sich bekannte Weise zwischen zwei Kontaktblechen 4, 4' eingeklebt, vorliegend mittels eines Zwei-Komponenten-Silikon-Klebstoffes, wobei eines der Kontaktbleche, in der Zeichnung mit dem Bezugszeichen 4' versehen, verlängert und Z-förmig ausgebildet ist und mit seinem abgewinkelten Ende einen Teil eines Steckers 5 bildet. Das mit dem Bezugszeichen 4 bezeichnete Kontaktblech ist im Wesentlichen rechteckförmig ausgebildet und parallel zum anderen Kontaktblech 4' angeordnet.

Auf den jeweils dem PTC-Element 3 gegenüberliegenden Seiten der Kontaktbleche 4 und 4' sind mittels einer entsprechenden Klebe-Verbindung Wellrippen 6 angebracht und an diesen, ebenfalls wiederum mit einer entsprechenden Klebe-Verbindung je ein weiteres Kontaktblech 4 und 4', wobei diese Kontaktbleche den zuvor beschriebenen Kontaktblechen 4 und 4' entsprechen. Zur einfachen elektrischen Kontaktierung der Z-förmigen Kontaktbleche 4' ist an deren Ende ein Kontaktelement 7 mit Federzungen 8 angebracht, in welche ein Steckerteil 9, vorliegend ein Stift eines Reglers 10, auf den an späterer Stelle näher eingegangen wird, einführbar ist.

Zum Schutz der Kontaktelemente 7 sind dieselben in einem Verbindungsstück 11 angeordnet, welches in zusammengebauten Zustand auch die Enden der Z-förmigen Kontaktbleche 4' aufnimmt. Dabei weist das Verbindungsstück 11 ein isolierendes Steckerteil-Kunststoff-Gehäuse 12 mit drei schlitzförmigen seitlichen Öffnungen 13 zur Einführung der drei elektrisch kontaktierenden Steckerteile 9 des Reglers 10 auf. Ferner weist das Verbindungsstück 11 eine isolierende Trennwand 14 auf, welche sicherstellt, dass ein Kurzschluss zwischen den Kontaktblechen 4 und 4' vermieden wird. Das Verbindungsstück 11 hat ferner eine abdichtende Funktion, so dass ein Ausströmen von Luft durch die Steckerverbindung der Steckerteile 5 mit den Steckerteilen 9 des Reglers 10 verhindert wird.

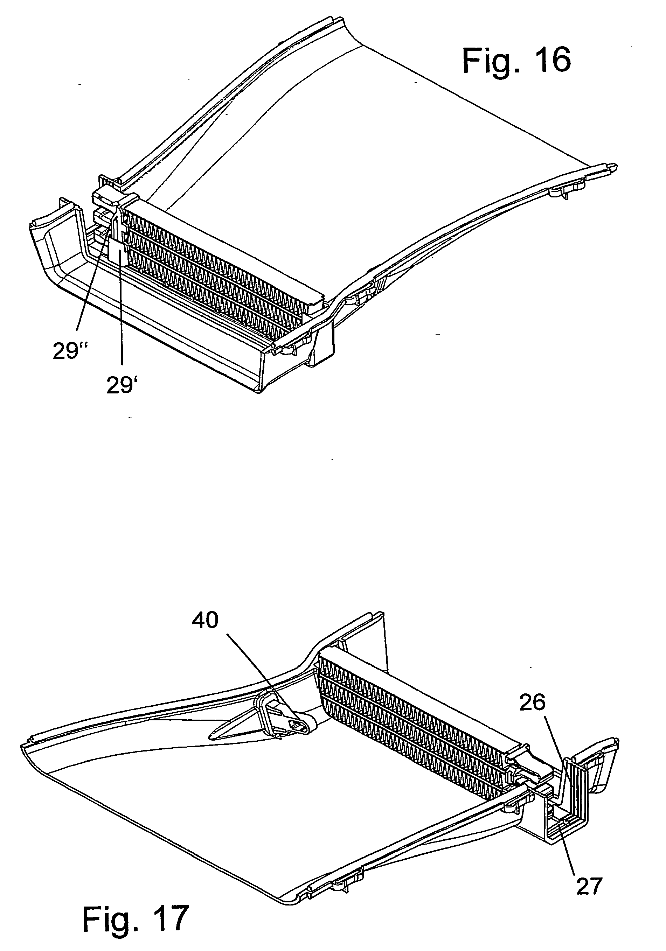

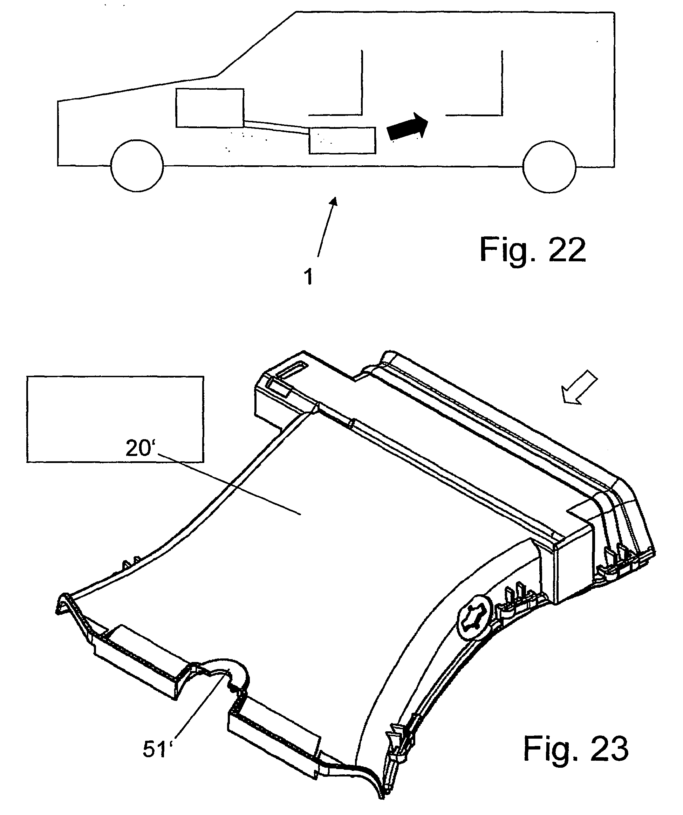

Um die zuvor beschriebene Anordnung herum ist ein zweiteiliges Kunststoff-Gehäuse angeordnet, im Folgenden als Luftkanal-Gehäuse 20 bezeichnet, welches Teil des Luftführungskanals der Kraftfahrzeug-Klimaanlage ist (vgl. Fig. 22). Dabei ist das Luftkanal-Gehäuse 20 nicht mittig geteilt, sondern, wie beispielsweise aus Fig. 17 ersichtlich, das Gehäuseunterteil 20' bildet den größten Teil des Luftkanalbereichs, und das Gehäuseoberteil 20" ist im Wesentlichen als Deckel ausgestaltet, wobei die Ränder des Deckels leicht nach unten heruntergezogen sind. Die asymmetrische Ausgestaltung des Luftkanal-Gehäuses 20 hilft Zusammenbaufehler zu vermeiden. Die Anordnung im Kraftfahrzeug ist vorliegend im Bereich unterhalb der vorderen Sitzreihe, so dass die Heizungsanordnung 1 die der zweiten Sitzreihe zugeführte Luft bei Bedarf erwärmt.

Die beiden Teile des Luftkanal-Gehäuses 20 ist mittels Clipsverbindungen 21 und Klammern 22 unter Einlage des Heizelements 2 mit Kontaktelementen 7, Verbindungsstück 11 und Regler 10 fest miteinander verbunden. In Folge der außenseitigen Anordnung der Gehäuseverbindungen, d.h. insbesondere der Clipsverbindungen 21 und Klammern 22, sind keine Befestigungselemente im Bereich des Luftkanals erforderlich, so dass keine Verwirbelungen, die mit einem Druckabfall verbunden sind, der im Luftkanal strömenden Luft etc. in Folge von Befestigungselementen erfolgen. Die Clipsverbindungen 21 ermöglichen zusätzlich eine Positionierung im Rahmen der Montage. Das Gehäuse 12 des Verbindungsstücks 11 stellt in Folge seiner Außenabmessungen eine exakte Positionierung im Luftkanal-Gehäuse 20 sicher, so dass eine sichere elektrische Kontaktierung möglich ist, wobei die Kontaktelemente 7 ein gewisses Spiel bezüglich des Heizelements 2 ermöglichen, wodurch Toleranzen ausgeglichen werden können, wobei gleichzeitig auch die Positionierung des Heizelements 2 unterstützt wird. Es gibt ferner dem Heizelement 2 im zusammengebauten Zustand einen zusätzlichen Halt.

Zur Abdichtung des Luftkanal-Gehäuses 20 ist entlang der Längsseiten der beiden Gehäuseteile eine Art Nut-Feder-Verbindung 23 vorgesehen. Im Bereich des Heizelements 2 sind in einer auf einer Seite zur Steckerdurchführung offenen nutartigen Vertiefung 24 mit einer luftanströmseitigen Wand 24', in welcher das Heizelement 2 angeordnet ist, Rippen 25 zur Abdichtung, zur Erhöhung der Festigkeit des Luftkanal-Gehäuses 20 und zur Beabstandung und thermischen Entkopplung des Heizelements 2 vom Luftkanal-Gehäuse 20 in jedem der beiden Gehäuseteile vorgesehen. Die Wand 24' verhindert einen Kontakt des Heizelements 2 mit einem in das Luftkanal-Gehäuse 20 eingeführten zuleitenden Kanal (nicht dargestellt), wobei sie einen Endanschlag für den zuleitenden Kanal bildet.

Im Bereich der seitlichen Öffnung zur Steckerdurchführung sind eine Mehrzahl von Rillen 26 ausgebildet, die der Abdichtung gegenüber dem in diesem Bereich angeordneten Regler 10 dienen.

Ferner ist in jedem Gehäuseteil in diesem Bereich mit Rillen 26 oben bzw. unten je eine rechteckförmige Öffnung 27 vorgesehen, welche Teil einer Clipsverbindung 28 ist und welche zur Sicherstellung der richtigen Position und zur Befestigung des Reglers 10 im Gehäuse 20 dient. Zur Vereinfachung der Montage sind ferner zwei führungsnutartige Positionierungselemente 29' am Gehäuse 20 ausgebildet, in welche ein leicht vorstehender Wandbereich 29" des Verbindungsstücks 11 eingeführt wird.

Auf der Seite, welche der seitlichen Öffnung zur Steckerdurchführung gegenüberliegt, sind im unteren Gehäuseteil 20' seitlich zwei vorstehende Abstandshalter 29 ausgebildet, welche im zusammengebauten Zustand zwischen den diesseitigen Enden zweier benachbarter Kontaktbleche 4 und 4' angeordnet sind, und die einen Kurzschluss zwischen denselben verhindern, d.h. die Funktion ist dieselbe, wie die der zuvor genannten Trennwand 14 des Verbindungsstücks 11, wobei sie zusätzlich eine positionierende Funktion bezüglich der Anordnung des Heizelements 2 im Luftkanal-Gehäuse 20 aufweisen.

Der Regler 10 weist ein Regler-Gehäuse 30 auf. Auf einer ersten Seite des Reglers 10 ist ein Flachstecker 31 mit den oben genannten drei elektrisch kontaktierenden Steckerteilen 9 ausgebildet, die im zusammengebauten Zustand mit dem Steckerteil 5 des Heizelements 2 verbunden sind. Auf der anderen Seite des Reglers 10 sind die Steckerteile für die elektrische Kontaktierung und die Ansteuerung ausgebildet, wobei der Steckerteil für den Pluspol mit 32, der für den Minuspol mit 33 und der für die Ansteuerung mit 34 bezeichnet ist. Gemäß dem vorliegenden Ausführungsbeispiel erfolgt die Ansteuerung des Reglers 10 über den Ansteuerungsstecker 34, es kann jedoch auch ein Bus, z.B. ein LIN- oder CAN-Bus, oder ein PWM-Signal (pulse wide modulation) zur Steuerung vorgesehen sein. Auch eine Diagnose im Falle eines Problems kann über die Stecker erfolgen. Zur Befestigung des Reglers 10 im Luftkanal-Gehäuse 20 ist am Regler-Gehäuse 30 oben und unten jeweils ein Vorsprung 35 ausgebildet, welcher Teil der Clipsverbindung 28 ist und im zusammengebauten Zustand in der entsprechende Öffnung 27 verrastet ist.

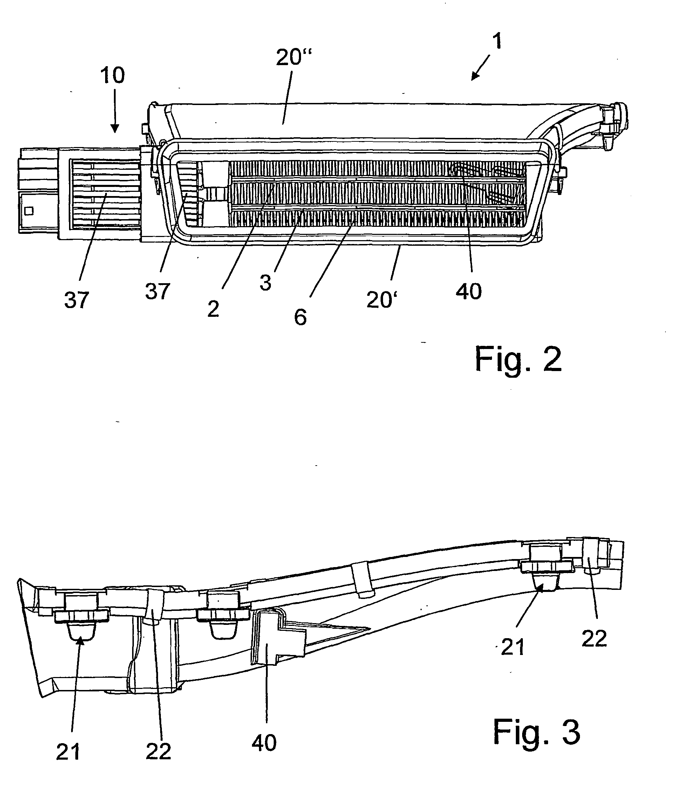

Am Regler-Gehäuse 30 ist eine Schräge 36 ausgebildet, welche in Zusammenwirkung mit einem entsprechenden Vorsprung (nicht dargestellt) an einem Gehäuseteil oder gegebenenfalls auch am Verbindungsstück 11 einen verdrehten Einbau des Reglers 10 verhindert (Fehlzusammenbau-Verhinderungsvorrichtung). Um eine ausreichende Kühlung des Reglers 10 zu ermöglichen, ist am Regler 10 eine mit Rippen versehene Kühlplatte 37 vorgesehen, welche sich im Wesentlichen außerhalb des Luftkanal-Gehäuses 20, aber auch teilweise innerhalb des Luftkanals im Luftkanal-Gehäuse 20 luftanströmseitig (vgl. Fig. 2), erstreckt, und der Kühlung der Leistungselektronik dient, welche im Regler-Gehäuse 30 angeordnet ist. Die teilweise Anordnung im Inneren des Luftkanals luftanströmseitig des Heizelements 2 verbessert die Kühlleistung insbesondere im Zuheizbetrieb, in welchem die größte Wärme im Regler 10 entsteht, und in welchem die Luft luftanströmseitig des Heizelements 2 kühl ist.

Ferner ist im Luftkanal-Gehäuse 20, in Luftströmungsrichtung nach dem Heizelement 2 ein Temperaturfühler 40 auf einer Seite angeordnet. Dabei dient der Temperaturfühler 40 der Temperaturregelung und erhöht die Sicherheit. Vorliegend handelt es sich beim Temperaturfühler 40 um einen PTC-Fühler, jedoch kann ein beliebiger anderer Temperaturfühler verwendet werden, wie beispielsweise ein NTC-Fühler oder ein Thermoelement. Der Temperaturfühler kann gegebenenfalls auch ganz entfallen.

Im Folgenden wird unter Bezugnahme auf die Figuren 23 bis 31 eine Variante des Ausführungsbeispiels beschrieben, wobei gleiche und gleichwirkende Bauteile oder Elemente mit den gleichen Bezugszeichen wie beim zuvor beschriebenen Ausführungsbeispiel versehen sind. Ferner ist das Gehäuse 20, sofern nachfolgend nicht anders beschrieben, entsprechend dem Gehäuse 20 gemäß dem zuvor beschriebenen Ausführungsbeispiel ausgebildet.

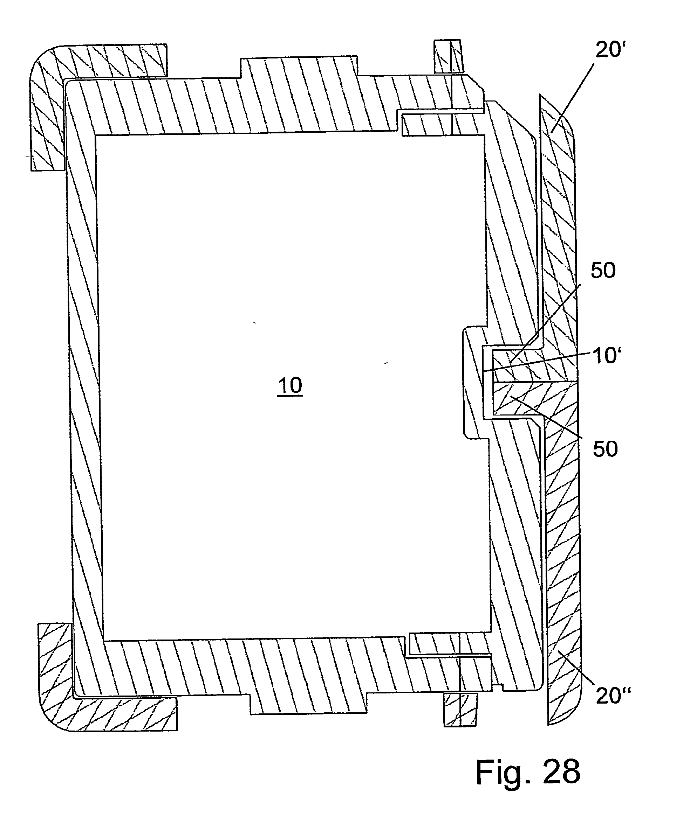

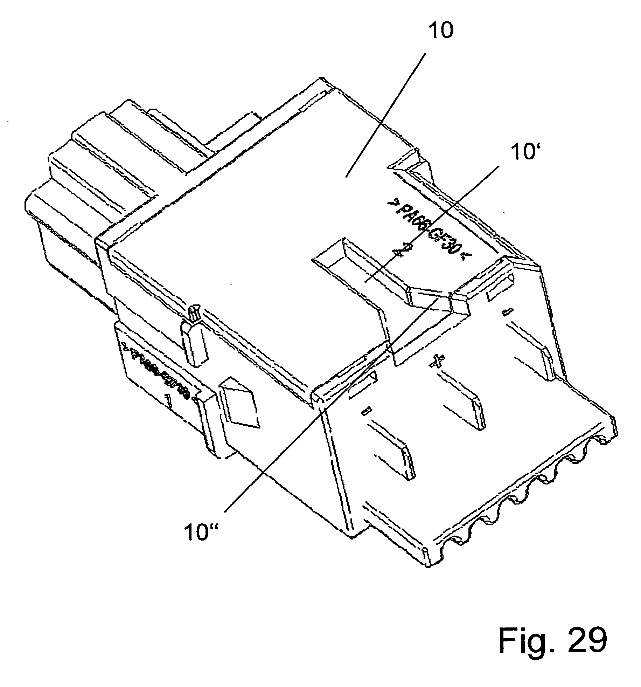

Die beiden Gehäuseteile 20' und 20" werden, wie in Fig. 28 dargestellt, im Bereich des seitlich angebrachten Reglers 10 von demselben mittels einer Nut 10' mit Einführschräge 10", die im Reglergehäuse ausgebildet ist (siehe Fig. 29), zusammengehalten, wofür an jedem Gehäuseteil 20', 20" ein nach innen in Richtung des Bauraums für den Regler 10 vorstehender Vorsprung 50 ausgebildet ist. Im korrekt zusammengebauten Zustand des Gehäuses 20 liegen die beiden Vorsprünge 50 exakt aufeinander und passen mit leichtem Spiel in die Nut 10' im Reglergehäuse, wenn der Regler 10 seitlich in den Gehäusebereich eingeschoben wird, der die Aufnahme für den Regler 10 bildet. Der Gehäusebereich, der die Aufnahme für den Regler 10 bildet, ist, wie auf Fig. 28 ersichtlich, mit Öffnungen zur Kühlung des Reglers 10 versehen.

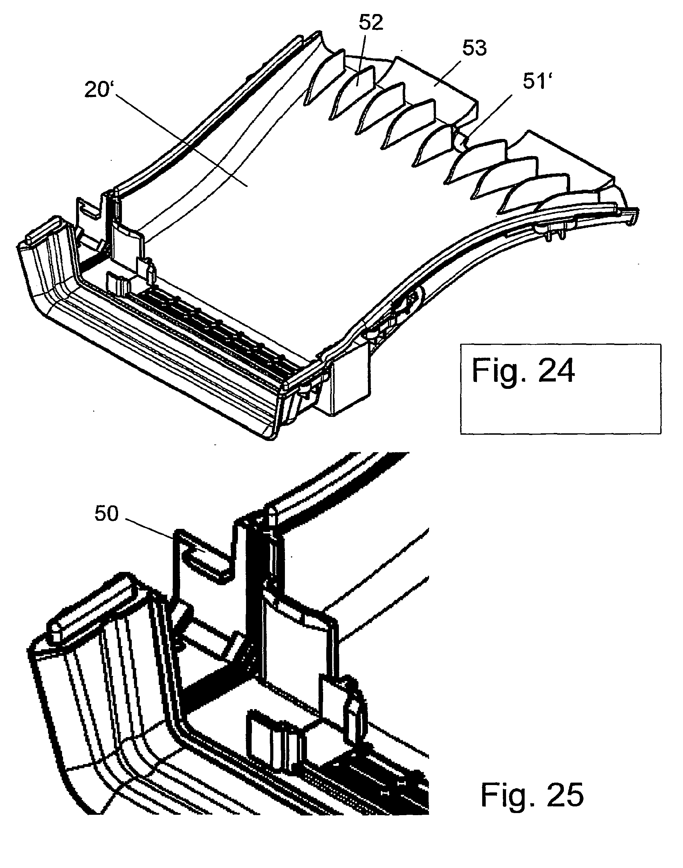

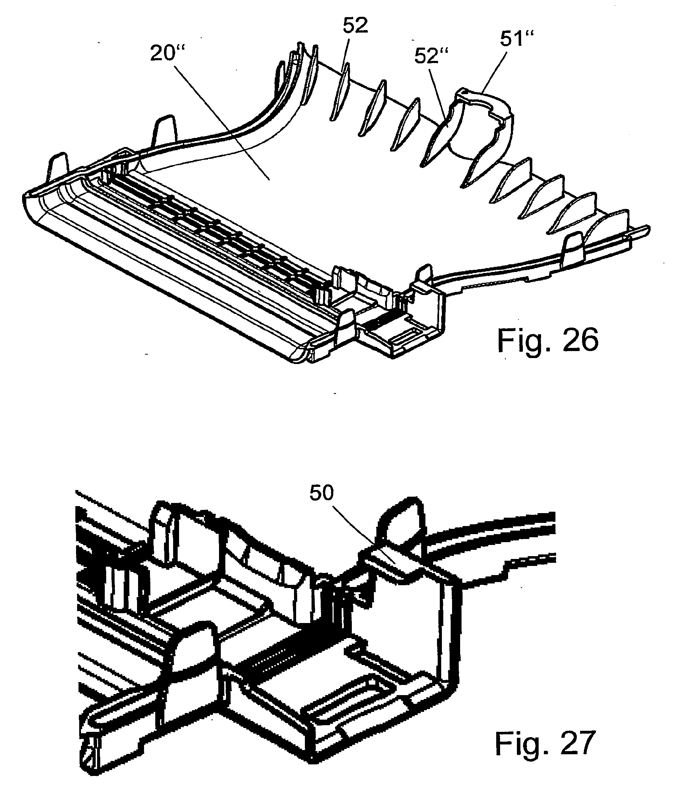

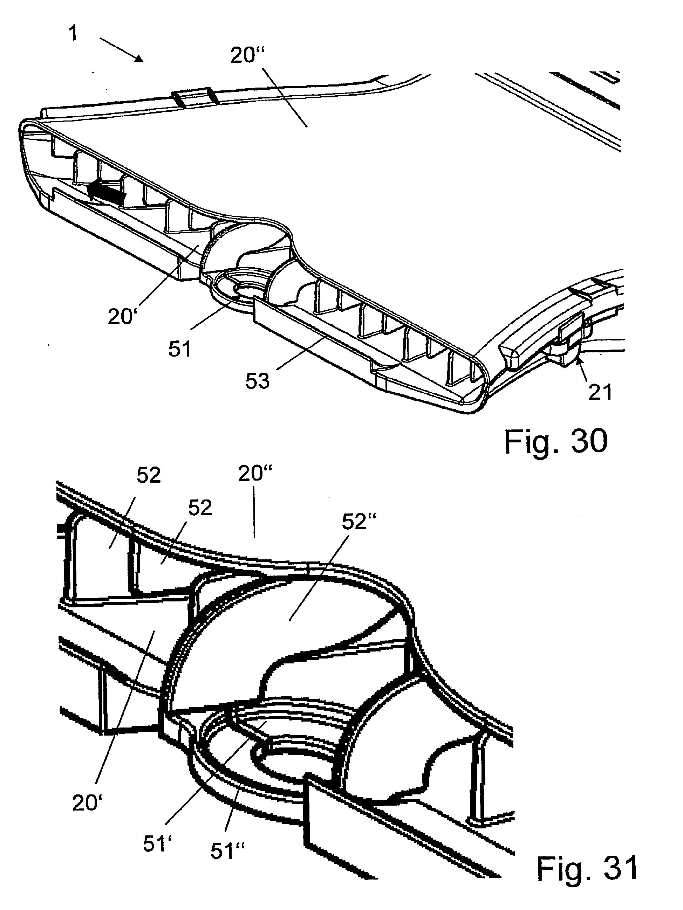

Zur Befestigung der beiden Gehäuseteile 20' und 20" am Fahrzeugboden (Bodenverkleidung oder Teppich) mittels einer Schraube (nicht dargestellt) und zur gleichzeitigen Sicherstellung einer positionsgenauen Fixierung der beiden Gehäuseteile 20' und 20" aneinander ist eine Lasche 51 vorgesehen, die durch beide Gehäuseteile 20' und 20" gebildet ist. Dabei ist einstückig am Gehäuseunterteil 20' ein erster Laschenteil 51' und am Gehäuseoberteil 20" ein zweiter Laschenteil 51" ausgebildet, die zusammen die Form eines Lochscheibe ergeben, wie aus den Figuren 24 und 26 ersichtlich ist. Hierbei übergreift das Gehäuseoberteil 20" das Gehäuseunterteil 20', wie aus Fig. 31 ersichtlich, so dass beim Anschrauben automatisch eine visuelle Kontrolle des korrekten Zusammenbaus der Gehäusehälften erfolgt. Auf Grund der mittigen Unterteilung der Lasche 51 erfolgt eine gleichmäßige Kraftverteilung auf beide Gehäuseteile 20' und 20", so dass beide Gehäuseteile mit im Wesentlichen der gleichen Kraft durch die Schraube an den Fahrzeugboden gepresst werden. Die Positionierung und Fixierung der Gehäuseteile 20' und 20" aneinander erfolgt mittels an den Gehäuseteilen vorgesehener Clipsverbindungen 21, die unter Bezugnahme auf das Ausführungsbeispiel zuvor beschrieben wurden. Dadurch, dass das Gehäuseoberteil 20" nach unten gezogen wird, werden zusätzlich Verformungen desselben vermieden, die auf Grund des ansonsten relativ großen nicht fixierten Bereichs des Luftaustritts auftreten könnten.

In das Gehäuse 20 sind ferner im Bereich des Luftaustritts Rippen 52 sowohl am Gehäuseunterteil 20' als auch am Gehäuseoberteil 20" integriert ausgebildet. Diese Rippen 52 sind über die gesamte Breite des Luftkanals in gleichmäßigen Abständen vorgesehen. Sie verlaufen im Wesentlichen parallel zu den Seiten des Luftkanals. Die mittleren Rippen 52" des Gehäuseoberteils 20" bilden zudem die Verbindungsstücke zum zweiten Laschenteil 51".

Die Rippen 52 versteifen das Gehäuse 20, insbesondere auch in Hinblick auf eine Druckbelastung von oben, und haben neben der Luftleitfunktion auch eine Schutzfunktion, da sie das Eintreten von Fremdkörpern, wie Papier o.ä., in den Luftkanal verhindern.

Ferner sind am Gehäuseunterteil 20' zwei Rampen 53 ausgebildet, um den Luftstrom nach oben zu führen, die durch den Befestigungsbereich der Lasche 51 in der Mitte des Luftaustritts unterbrochen sind. Die Rampen 53 reichen seitlich vorliegend bis zur vorletzten äußeren Rippe 52, können jedoch auch über die gesamte Breite ausgebildet sein. Alternativ können auch mehr Rippen, bspw. auch mit unterschiedlicher Höhe, bspw. außen höher als in der Mitte, oder eine einzige, durchgehende Rippe vorgesehen sein. Die Rampen 53 dienen zur Lenkung des Luftstroms nach oben, so dass trotz einer Fixierung der Heizungsanordnung 1 am Fahrzeugboden die Insassen besser erwärmt werden.

## Patentansprüche

1. Elektrische Heizungsanordnung, insbesondere für ein Kraftfahrzeug, mit einem Luftkanal-Gehäuse (20), durch welchen im Bedarfsfall zu erwärmende Luft strömt, und einem elektrischen Heizelement (2), das im Luftkanal-Gehäuse (20) angeordnet ist, wobei das elektrische Heizelement (2) direkt im Luftkanal-Gehäuse (20) angeordnet ist, **dadurch gekennzeichnet, dass** das Luftkanal-Gehäuse (20) im Bereich, in welchem das elektrische Heizelement (2) angeordnet ist, mindestens zweiteilig als Kunststoffgehäuse ausgebildet ist.

2. Elektrische Heizungsanordnung nach Anspruch 1, **dadurch gekennzeichnet, dass** die beiden Teile (20', 20") des Luftkanal-Gehäuses (20) mittels einer Clipsverbindung (21) und/oder Klammern (22) auf der Gehäuseaußenseite miteinander verbunden sind.

3. Elektrische Heizungsanordnung nach Anspruch 1 oder 2, **dadurch gekennzeichnet, dass** die beiden Teile (20', 20") des Luftkanal-Gehäuses (20) asymmetrisch ausgebildet sind.

4. Elektrische Heizungsanordnung nach einem der Ansprüche 1 bis 3, **dadurch gekennzeichnet, dass** zwischen den beiden Teilen (20', 20") des Luftkanal-Gehäuses (20) eine Art Nut-Feder-Verbindung (23) ausgebildet sind.

5. Elektrische Heizungsanordnung einem der vorhergehenden Ansprüche, **dadurch gekennzeichnet, dass** das elektrische Heizelement (2) mindestens ein PTC-Element (3) umfasst.

6. Elektrische Heizungsanordnung nach Anspruch 5, **dadurch gekennzeichnet, dass** auf beiden Seiten des PTC-Elements (3) Kontaktbleche (4, 4') angebracht sind.

7. Elektrische Heizungsanordnung nach Anspruch 5 oder 6, **dadurch gekennzeichnet, dass** das PTC-Element (3) an einem Kontaktblech (4, 4') mittels einer Klebe-Verbindung angebracht ist.

8. Elektrische Heizungsanordnung nach einem der Ansprüche 5 bis 6, **dadurch gekennzeichnet, dass** auf der dem PTC-Element (3) abgewandten Seite des Kontaktblechs (4, 4') eine Wellrippe (6) mittels einer Klebe-Verbindung angebracht ist.

9. Elektrische Heizungsanordnung nach einem der Ansprüche 5 bis 8, **dadurch gekennzeichnet, dass** auf der dem PTC-Element (3) abgewandten Seite der Wellrippe (6) ein weiteres Kontaktblech (4, 4') mittels einer Klebe-Verbindung an der Wellrippe (6) angebracht ist.

10. Elektrische Heizungsanordnung nach einem der Ansprüche 5 bis 9, **dadurch gekennzeichnet, dass** mindestens zwei Kontaktbleche (4') derart ausgebildet sind, dass sie an ihrem einen Ende als Teil eines Steckers (5) ausgebildet sind.

11. Elektrische Heizungsanordnung nach Anspruch 10, **dadurch gekennzeichnet, dass** die Kontaktbleche (4') Z-förmig ausgebildet sind.

12. Elektrische Heizungsanordnung nach einem der Ansprüche 5 bis 11, **dadurch gekennzeichnet, dass** eine Klebe-Verbindung zwischen PTC-Element (3) und Kontaktblech (4, 4') und/oder Kontaktblech (4, 4') und Wellrippe (6) durch einen Zwei-Komponenten-Silikon-Klebstofif gebildet ist.

13. Elektrische Heizungsanordnung nach einem der vorhergehenden Ansprüche, **dadurch gekennzeichnet, dass** im Luftkanal-Gehäuse (20) ein Verbindungsstück (11) mit einem isolierenden Gehäuse (12) angeordnet ist.

14. Elektrische Heizungsanordnung nach einem der vorhergehenden Ansprüche, **dadurch gekennzeichnet, dass** zumindest ein führungsnutartiges Positionierungselement (29') am Gehäuse (20) ausgebildet ist, in welche ein leicht vorstehender Wandbereich (29") des Verbindungsstücks (11) einführbar ist.

15. Elektrische Heizungsanordnung nach Anspruch 13 oder 14, **dadurch gekennzeichnet, dass** das Gehäuse (12) eine isolierende Trennwand (14) aufweist, welche sicherstellt, dass ein Kurzschluss vermieden wird.

16. Elektrische Heizungsanordnung nach einem der vorhergehenden Ansprüche, **dadurch gekennzeichnet, dass** am Luftkanal-Gehäuse (20) mindestens ein Abstandshalter (29) ausgebildet ist, welcher sicherstellt, dass ein Kurzschluss innerhalb des elektrischen Heizelements (2) vermieden wird.

17. Elektrische Heizungsanordnung nach einem der vorhergehenden Ansprüche, **dadurch gekennzeichnet, dass** ein Regler (10) für die elektrische Ansteuerung des elektrischen Heizelements (2) vorgesehen ist.

18. Elektrische Heizungsanordnung nach Anspruch 17, **dadurch gekennzeichnet, dass** der Regler (10) seitlich am Heizelement (2) angeordnet ist.

19. Elektrische Heizungsanordnung nach Anspruch 17 oder 18, **dadurch gekennzeichnet, dass** der Regler (10) eine Kühlplatte (37) aufweist, welche zumindest teilweise in das Luftkanal-Gehäuse (20) ragt.

20. Elektrische Heizungsanordnung nach einem der vorhergehenden Ansprüche, **dadurch gekennzeichnet, dass** im durch das Luftkanal-Gehäuse (20) gebildeten Luftkanal nach dem Heizelement (2) ein Temperaturfühler (40) angeordnet ist.

## Claims

1. An electrical heating arrangement, especially for a motor vehicle, with an air duct housing (20) through which air to be heated flows, as required, and with an electrical heating element (2) which is arranged in the air duct housing (20), wherein the electrical heating element (2) is arranged directly in the air duct housing (20), **characterized in that** the air duct housing (20) is designed in at least two parts as a plastic housing in the region in which the electrical heating element (2) is arranged.

2. The electrical heating arrangement as claimed in claim 1, **characterized in that** the two parts (20', 20") of the air duct housing (20) are connected to one another by means of a snap connection (21) and/or clips (22) on the outside of the housing.

3. The electrical heating arrangement as claimed in claim 1 or 2, **characterized in that** the two parts (20', 20") of the air duct housing (20) are designed asymmetrically.

4. The electrical heating arrangement as claimed in one of claims 1 to 3, **characterized in that** a kind of tongue-and-groove connection (23) is formed between the two parts (20', 20") of the air duct housing (20).

5. The electrical heating arrangement as claimed in one of the preceding claims, **characterized in that** the electrical heating element (2) comprises at least one PTC element (3).

6. The electrical heating arrangement as claimed in claim 5, **characterized in that** contact plates (4, 4') are attached on both sides of the PTC element (3).

7. The electrical heating arrangement as claimed in claim 5 or 6, **characterized in that** the PTC element (3) is attached to a contact plate (4, 4') by means of an adhesive connection.

8. The electrical heating arrangement as claimed in one of claims 5 to 6, **characterized in that** a corrugated rib (6) is attached by means of an adhesive connection to that side of the contact plate (4, 4') which faces away from the PTC element (3).

9. The electrical heating arrangement as claimed in one of claims 5 to 8, **characterized in that** a further contact plate (4, 4') is attached to the corrugated rib (6) by means of an adhesive connection on that side of the corrugated rib (6) which faces away from the PTC element (3).

10. The electrical heating arrangement as claimed in one of claims 5 to 9, **characterized in that** at least two contact plates (4') are designed in such a way that they are designed at one end as part of a plug (5).

11. The electrical heating arrangement as claimed in claim 10, **characterized in that** the contact plates (4') are of Z-shaped design.

12. The electrical heating arrangement as claimed in one of claims 5 to 11, **characterized in that** an adhesive connection between the PTC element (3) and contact plate (4, 4') and/or the contact plate (4, 4') and corrugated rib (6) is formed via a two-component silicone adhesive.

13. The electrical heating arrangement as claimed in one of the preceding claims, **characterized in that** a connection piece (11) with an insulating housing (12) is arranged in the air duct housing (20).

14. The electrical heating arrangement as claimed in one of the preceding claims, **characterized in that** at least one positioning element (29') resembling a guide groove is formed on the housing (20), a slightly projecting wall region (29") of the connection piece (11) being capable of being introduced into said positioning element.

15. The electrical heating arrangement as claimed in claim 13 or 14, **characterized in that** the housing (12) has an insulating partition (14) which ensures that a short-circuit is avoided.

16. The electrical heating arrangement as claimed in one of the preceding claims, **characterized in that** at least one spacer (29) is formed on the air duct housing (20) and ensures that a short--circuit within the electrical heating element (2) is avoided.

17. The electrical heating arrangement as claimed in one of the preceding claims, **characterized in that** a controller (10) for the electrical activation of the electrical heating element (2) is provided.

18. The electrical heating arrangement as claimed in claim 17, **characterized in that** the controller (10) is arranged laterally on the heating element (2).

19. The electrical heating arrangement as claimed in claim 17 or 18, **characterized in that** the controller (10) has a cooling plate (37) which projects at least partially into the air duct housing (20).

20. The electrical heating arrangement as claimed in one of the preceding claims, **characterized in that** a temperature sensor (40) is arranged downstream of the heating element (2) in the air duct formed by the air duct housing (20).

## Revendications

1. Dispositif de chauffage électrique, en particulier pour un véhicule automobile, comprenant un boîtier de conduit d'air (20) à travers lequel s'écoule de l'air à réchauffer, si nécessaire, et un élément chauffant électrique (2) qui est disposé dans le boîtier de conduit d'air (20), où l'élément chauffant électrique (2) est disposé directement dans le boîtier de conduit d'air (20),
**caractérisé en ce que** le boîtier de conduit d'air (20), dans la zone dans laquelle l'élément chauffant électrique (2) est disposé, est configuré comme un boîtier en matière plastique, au moins en deux parties.

2. Dispositif de chauffage électrique selon la revendication 1, **caractérisé en ce que** les deux parties (20', 20") du boîtier de conduit d'air (20) sont assemblées l'une à l'autre sur le côté extérieur du boîtier, au moyen d'un assemblage clipsé (21) et / ou de pinces (22).

3. Dispositif de chauffage électrique selon la revendication 1 ou 2, **caractérisé en ce que** les deux parties (20', 20") du boîtier de conduit d'air (20) sont configurées de façon asymétrique.

4. Dispositif de chauffage électrique selon l'une quelconque des revendications 1 à 3, **caractérisé en ce que** l'assemblage (23) entre les deux parties (20', 20") du boîtier de conduit d'air (20) est configuré comme un type d'assemblage par emboîtement mâle / femelle.

5. Dispositif de chauffage électrique selon l'une quelconque des revendications précédentes, **caractérisé en ce que** l'élément chauffant électrique (2) comprend au moins un élément (3) à coefficient de température positif (CTP).

6. Dispositif de chauffage électrique selon la revendication 5, **caractérisé en ce que** des tôles de contact (4, 4') sont fixées sur les deux côtés de l'élément (3) à coefficient de température positif (CTP).

7. Dispositif de chauffage électrique selon la revendication 5 ou 6, **caractérisé en ce que** l'élément (3) à coefficient de température positif (CTP) est fixé sur une tôle de contact (4, 4'), au moyen d'un assemblage collé.

8. Dispositif de chauffage électrique selon l'une quelconque des revendications 5 à 7, **caractérisé en ce qu'**une ailette ondulée (6) est fixée, au moyen d'un assemblage collé, sur le côté de la tôle de contact (4, 4'), placé à l'opposé de l'élément (3) à coefficient de température positif (CTP).

9. Dispositif de chauffage électrique selon l'une quelconque des revendications 5 à 8, **caractérisé en ce que**, sur le côté de l'ailette ondulée (6), placé à l'opposé de l'élément (3) à coefficient de température positif (CTP), une autre tôle de contact (4, 4') est fixée sur l'ailette ondulée (6), au moyen d'un assemblage collé.

10. Dispositif de chauffage électrique selon l'une quelconque des revendications 5 à 9, **caractérisé en ce qu'**au moins deux tôles de contact (4') sont configurées de manière telle, qu'elles soient configurées, au niveau de l'une de leurs extrémités, comme faisant partie d'une fiche mâle (5).

11. Dispositif de chauffage électrique selon la revendication 10, **caractérisé en ce que** les tôles de contact (4') sont configurées en forme de Z.

12. Dispositif de chauffage électrique selon l'une quelconque des revendications 5 à 11, **caractérisé en ce qu'**un assemblage collé, entre l'élément (3) à coefficient de température positif (CTP) et une tôle de contact (4, 4') et / ou entre une tôle de contact (4, 4') et une ailette ondulée (6), est formé par une colle silicone à deux composants.

13. Dispositif de chauffage électrique selon l'une quelconque des revendications précédentes, **caractérisé en ce qu'**une pièce d'assemblage (11) comprenant un boîtier isolant (12) est disposée dans le boîtier de conduit d'air (20).

14. Dispositif de chauffage électrique selon l'une quelconque des revendications précédentes, **caractérisé en ce qu'**au moins un élément de positionnement (29'), du type à rainure de guidage, est configuré sur le boîtier (20), élément de positionnement dans lequel peut être introduite une zone de paroi (29") de la pièce d'assemblage (11), faisant légèrement saillie.

15. Dispositif de chauffage électrique selon la revendication 13 ou 14, **caractérisé en ce que** le boîtier (12) présente une paroi de séparation isolante (14) qui garantit qu'un court-circuit est évité.

16. Dispositif de chauffage électrique selon l'une quelconque des revendications précédentes, **caractérisé en ce qu'**au moins une pièce d'écartement (29) est configurée sur le boîtier de conduit d'air (20), pièce d'écartement qui garantit qu'un court-circuit est évité à l'intérieur de l'élément chauffant électrique (2).

17. Dispositif de chauffage électrique selon l'une quelconque des revendications précédentes, **caractérisé en ce qu'**il est prévu un régulateur (10) pour la commande électrique de l'élément chauffant électrique (2).

18. Dispositif de chauffage électrique selon la revendication 17, **caractérisé en ce que** le régulateur (10) est disposé latéralement sur l'élément chauffant (2).

19. Dispositif de chauffage électrique selon la revendication 17 ou 18, **caractérisé en ce que** le régulateur (10) présente une plaque de refroidissement (37) qui fait saillie au moins partiellement dans le boîtier de conduit d'air (20).

20. Dispositif de chauffage électrique selon l'une quelconque des revendications précédentes, **caractérisé en ce qu'**un capteur de température (40) est disposé en aval de l'élément chauffant (2), dans le conduit d'air formé par le boîtier de conduit d'air (20).
